Europäisches Patentamt

European Patent Office

Office européen des brevets

(19)

(11) Publication number:

0 352 869
A2

(12) # EUROPEAN PATENT APPLICATION

(21) Application number: 89201991.0

(51) Int. Cl.⁴: **G01V 1/22**

(22) Date of filing: 27.07.89

(30) Priority: 29.07.88 US 226163

(43) Date of publication of application:
31.01.90 Bulletin 90/05

(84) Designated Contracting States:
DE FR GB NL

(71) Applicant: SHELL INTERNATIONALE
RESEARCH MAATSCHAPPIJ B.V.
Carel van Bylandtlaan 30
NL-2596 HR Den Haag(NL)

(72) Inventor: Cowles, Christopher Smith
6119 Vickijohn
Houston Texas 77096(US)
Inventor: Leveille, Jacques Pierre
5418 Holly Street
Bellaire Texas 77401(US)

(74) Representative: Aalbers, Onno et al
P.O. Box 302
NL-2501 CH The Hague(NL)

(54) Modal transmission method and apparatus for multi-conductor wireline cables.

(57) Apparatus and methods are disclosed for transmitting multiple, independent electrical signals over a conventional wireline logging cable while avoiding the bandwidth limitations encountered with customary schemes. Each signal is carried on a plurality of conductor pairs (e.g., two pairs) arranged symmetrically such that the net signal coupled into non-involved conductors is zero. With no coupling, frequency-dependent mutual impedance losses are effectively eliminated.

EP 0 352 869 A2

## MODAL TRANSMISSION METHOD AND APPARATUS FOR MULTI-CONDUCTOR WIRELINE CABLES

The present invention relates to the search for petroleum reserves within the earth, and more particularly to an improved communication system and method for significantly increasing the amount (rate) and quality of data which can be carried by conventional logging cables used in making sophisticated, data-intensive measurements (logs) of the properties of earth formations penetrated by a borehole.

As the understanding of earth materials and the demand for more and better formation measurements have increased over the years, methods for transmitting borehole log measurements and measurement data have not kept pace. The development of the silicon integrated-circuit microprocessor has made possible measurement and control functions virtually unthinkable a decade ago, and the ability now exists to perform measurements in the borehole far exceeding the ability to transmit the data to the surface. Although a number of companies are currently pursuing development of optical fiber cables for use in the borehole, that work appears to have encountered more problems than expected, and a reliable optical fiber transmission system may still be several years away. Also, the conventional wireline type of cable is in such widespread use in the logging industry that its replacement will come only at great expense. Therefore, if standard cables are to continue to be used, as more and more of the measurement and control functions in logging tools are digitized and data rates and spectrum bandwidths to be transmitted become correspondingly greater, better data transmission means over these standard cables must be found.

In conventional borehole logging, a seven-conductor armored cable, commonly referred to as a "wireline", is normally used in the well logging industry to provide power and control signals to, receive data from, and suspend logging tools in a well. Such a cable may be more than 7600 meter long in a single piece. It consists of six insulated copper conductors spirally wrapped around a center conductor, embedded in a semiconductive rubber and surrounded by two counter-wound layers of spirally-wrapped high strength steel wires. The diameter is normally 1.2 centimeter, and the breaking strength about $71 \times 10^3$ Newton. During manufacture, cable characteristics such as wire lay and spacing are carefully controlled for uniformity, and the manufacture is an art now practiced by but a few companies.

The parallel lay of the conductors of the wireline and their great length give rise to a number of special electrical problems not normally encountered in common areas of electronics such as computer design, but which have long been of interest in, for example, the power transmission industry and long-distance telephone lines. Curiously, however, the work in these other industries seems to have gone unnoticed by practitioners trying to solve data transmission problems in the wireline logging industry.

In view of the ever increasing demand for more data of greater fidelity from logging tools, the behaviour demonstrated for existing seven-conductor wirelines is becoming clearly unacceptable. These responses are especially undesirable in the case of transmission of high-speed digital data where the signal spectrum may be spread over a very wide band. Moreover, close examination of the possibilities will show that the problem is not just the result of a bad choice of conductors for the signals, as there are no pairings of wires which are not susceptible to coupling with other pairs. Unfortunately, it is also very difficult to compensate for the poor response of a single pair because the logging cable is subjected to wide and unpredictable variations in temperature and pressure. Those variations will, in turn, lead to changes in the transmission and coupling responses which will be difficult to track from one end only.

The present invention therefore provides a method for transmitting data through such a cable, comprising:

a) transmitting such data oppositely going on the conductors of at least one conductor pair such that substantially all non-selected conductors in the cable are substantially equally coupled to oppositely going conductors in the selected data carrying conductors, and such that the transmitted data which is coupled inductively and capacitively into the non-selected conductors is, for each such non-selected conductor, accordingly coupled substantially equally in both directions or polarities to cause coupling of the data signals from the selected conductors into each of the non-selected conductors to be effectively cancelled due to the symmetrically presented but oppositely signed coupled signals, thereby effectively neutralizing mutual impedance-caused bandwidth limiting frequency dependant signal attenuation in the logging cable and providing for improved bandwidth data transmission independently of temperature and environmentally dependent changes in inter-conductor coupling in the logging cable while the cable is being used in a borehole, and

b) receiving the data which is transmitted through the cable.

The invention further provides a method for transmitting multiple, independent data signals through such a cable on multiple, independent channels and with improved bandwidth, comprising:

a) for each such channel, selecting at least two pairs of conductors for transmitting the same data on each pair, such that:

i) substantially all non-selected conductors in the cable are substantially equally coupled to oppositely going conductors in the selected data carrying conductors, and such that the transmitted data which is coupled inductively and capacitively into the non-selected conductors is, for each such non-selected conductor, accordingly coupled substantially equally in both directions or polarities to cause coupling of the data signals from the selected conductors into each of the non-selected conductors to be effectively cancelled due to the symmetrically presented but oppositely signed coupled signals, thereby effectively neutralizing mutual impedance-caused bandwidth limiting frequency dependant signal attenuation in the logging cable and providing for improved bandwidth data transmission independently of temperature and environmentally dependent changes in inter-conductor coupling in the logging cable while the cable is being used in a borehole, and ii) the conductors for each such channel, while permitted to share conductors with another, are a unique set of conductors for that channel,

b) for each such channel, transmitting the data for that channel:

i) substantially equally on each selected pair, such that the signal levels for that data on one conductor of one pair are substantially equal to those on one conductor of the other pair, and those on the other conductor of each pair are also substantially equal to each other, and the conductors in each pair are oppositely going conductors for the data signals, and

ii) with the various data signals for each such selected conductor additively superimposed thereon regardless of the various channels with which those particular data signals are associated, and

c) receiving the data which is transmitted through the cable by extracting the various data signals for each of the channels from the superimposed signals.

According to the present invention furthermore an apparatus is provided for transmitting data through a cable, comprising:

a) means for transmitting such data oppositely going on the conductors of at least one conductor pair such that substantially all non-selected conductors in the cable are substantially equally coupled to oppositely going conductors in the selected data carrying conductors, and such that the transmitted data which is coupled inductively and capacitively into the non-selected conductors is, for each such non-selected conductor, accordingly coupled substantially equally in both directions or polarities to cause coupling of the data signals from the selected conductors into each of the non-selected conductors to be effectively cancelled due to the symmetrically presented but oppositely signed coupled signals, thereby effectively neutralizing mutual impedance-caused bandwidth limiting frequency dependant signal attenuation in the logging cable and providing for improved bandwidth data transmission independently of temperature and environmentally dependent changes in inter-conductor coupling in the logging cable while the cable is being used in a borehole, and

b) means for receiving the data which is transmitted through the cable.

Another embodiment of the present invention provides an apparatus for transmitting multiple, independent data signals through such a cable on multiple, independent channels and with improved bandwidth, comprising:

a) for each such channel, means for selecting at least two pairs of conductors for transmitting the same data on each pair, such that:

i) substantially all non-selected conductors in the cable are substantially equally coupled to oppositely going conductors in the selected data carrying conductors, and such that the transmitted data which is coupled inductively and capacitively into the non-selected conductors is, for each such non-selected conductor, accordingly coupled substantially equally in both directions or polarities to cause coupling of the data signals from the selected conductors into each of the non-selected conductors to be effectively cancelled due to the symmetrically presented but oppositely signed coupled signals, thereby effectively neutralizing mutual impedance-caused bandwidth limiting frequency dependant signal attenuation in the logging cable and providing for improved bandwidth data transmission independently of temperature and environmentally dependent changes in inter-conductor coupling in the logging cable while the cable is being used in a borehole, and

ii) the conductors for each such channel, while permitted to share conductors with another, are a unique set of conductors for that channel,

b) for each such channel, means for transmitting the data for that channel:

i) substantially equally on each selected pair, such that the signal levels for that data on one conductor of one pair are substantially equal to those on one conductor of the other pair, and those on the other conductor of each pair are also substantially equal to each other, and the conductors in each pair are oppositely going conductors for the data signals, and

ii) with the various data signals for each such selected conductor additively superimposed thereon

3

regardless of the various channels with which those particular data signals are associated, and

c) means for receiving the data which is transmitted through the cable by extracting the various data signals for each of the channels from said superimposed signals.

These and other objects and advantages of the invention will be apparent from the following description, the accompanying drawings, and the appended claims.

Fig. 1 is a cross-sectional view of a typical, prior art seven- conductor armored wireline logging cable;

Fig. 2 is a graphical illustration of the transmission response, magnitude, and phase of one pair of conductors in a cable such as that illustrated in Fig. 1;

Fig. 3 is a graphical illustration of the cross-coupling response of one pair of conductors into another in a cable of the type illustrated in Fig. 1;

Fig. 4 is a mathematical operational representation of a wireline such as that illustrated in Fig. 1, establishing the basis for representing the propagation characteristics of the wireline by the coupling matrix P;

Fig. 5 schematically illustrates the various coupling terms for conductor 1 in the coupling matrix P;

Fig. 6 is a schematic or physical representation of the actual conductor selections made in accord with the eigenvectors determined for the coupling matrix P, and also clearly showing the equal coupling in both directions of the signals from the various selected conductors into the various non-selected conductors;

Fig. 7 illustrates the specification of the various terms for a 7x7 matrix wherein the center conductor is also considered;

Fig. 8 is a generalized schematic drawing for an operational-amplifier circuit for summing and differencing the voltages for superimposition of data signals onto a particular single conductor;

Fig. 9 is a schematic drawing for an interface for both transmitting to, receiving from, and powering a logging tool by means of such a seven-conductor wireline;

Fig. 10 is a graphical illustration similar to Fig. 2 showing the improved transmission response for data transmitted in accord with the present invention;

Fig. 11 is a graphical illustration showing the ratio of transmitted signal to cross-coupled signal for the far end of the cable;

Fig. 12 is an illustration similar to Fig. 11 for the near end of the cable; and

Fig. 13 graphically illustrates the improvement in high-frequency transmission response which can be obtained with an appropriate transfer function.

With reference to the drawings, the new and improved method and apparatus for transmitting data through a multi-conductor borehole logging cable, according to the present invention, will now be described.

For a good understanding of the above-mentioned problems first an overview is given of prior art applications.

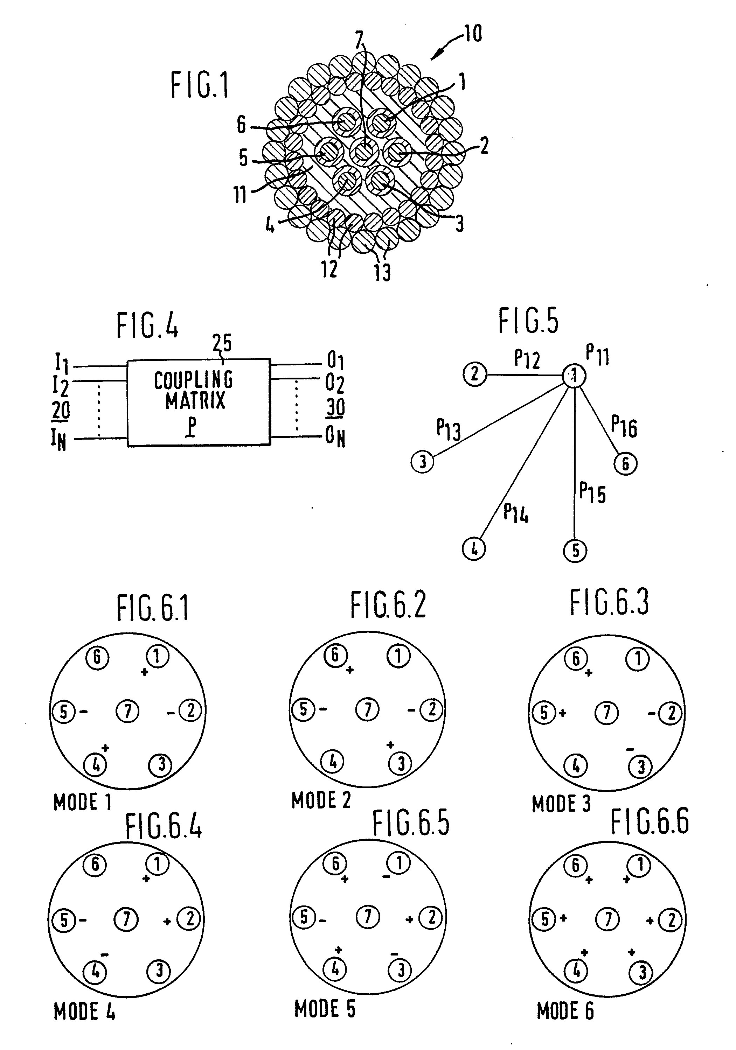

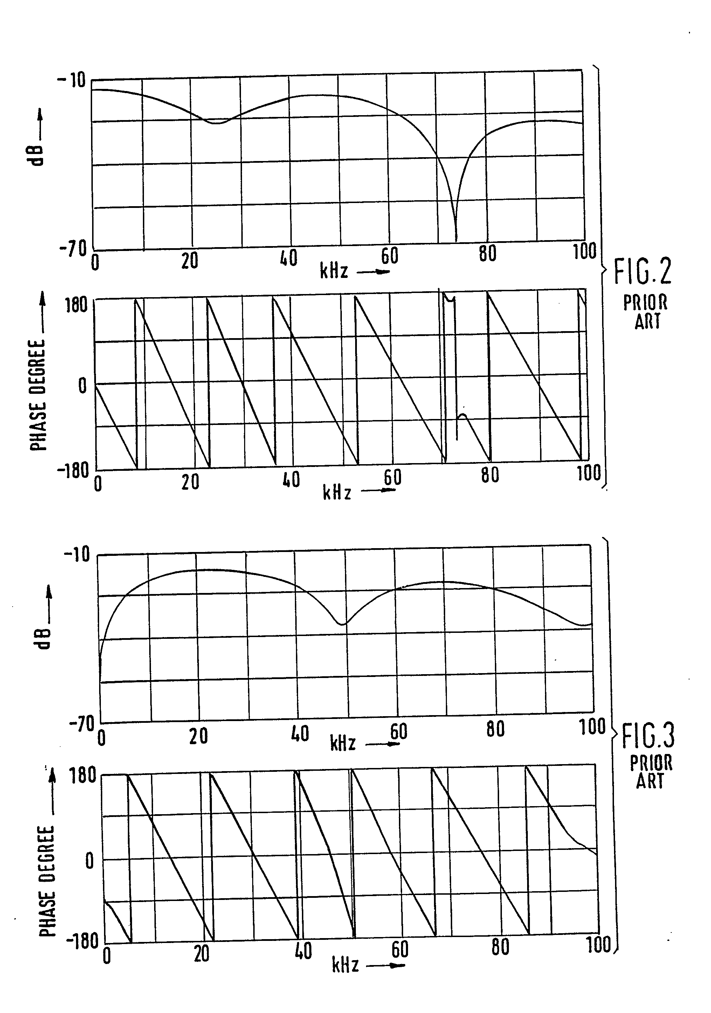

Referring to Fig. 1 when first faced with the problem of transmitting power or data over a logging wireline, the designer is apt to pick a pair of wires 1-7 in a cable 10, e.g., 1-4 (wire 1 and wire 4), for transmission of one signal. Another pair, 2-6, might be selected for the second signal, and the last pair, 3-5, would be for the third signal. If necessary, a fourth signal would reluctantly be transmitted on the center conductor 7. (The reason will be shown later.) This practice is believed to have long been common in the industry.

Note that lines 2 and 3 are side-by-side for their entire length, as are lines 6 and 5. Thus, the 2-6 pair is intimately coupled to the 3-5 pair, not only by the distributed capacitance between them, but as a 1:1 distributed transformer (inductively coupled).

The effect on the transmission characteristics of either pair is remarkable, as illustrated by Figs. 2 and 3. Fig. 2 shows the transmission response, as magnitude and phase, of one pair in an 5500 metre cable. Here, all lines have been carefully terminated in their characteristic impedances (about 50 ohms) at both ends to eliminate reflections from the ends. At dc (0 Hz) there is an expected loss of 15 db due to the line and terminating resistances. There are also unexpected and unwanted minima at both 25 kHz and 73 kHz, the notch at 73 kHz being surprisingly sharp and deep. The linear phase characteristic shown in Fig. 2 implies an end-to-end delay of 62 microseconds, and the other phase discontinuities would be expected from the magnitude characteristic. In Fig. 3 is shown the cross-coupling response of one pair into the other (measured at the far end). As would be expected, the coupling goes to zero at dc, but rises rather abruptly to peaks at 25 kHz and 73 kHz, reaching levels nearly as high as the low-frequency transmission response on a single pair.

Measurements (not shown here) on the center conductor indicate that it, taken singly, is a reasonably good transmission circuit. However, as a single-conductor circuit (as opposed to differential) it is subject to potential drops along the wireline which partially add to, and become part of, the transmitted signal. In

4

conventional instrumentation circuits, signals are transmitted differentially, and potential drops (common-mode signals) along the cable route do not become part of the normal-mode signal. Use of the center conductor as a data path leaves it vulnerable to interference which will be unpredictable. (In one well, for example, the potential drop from the surface to the bottom of the casing at 20 m was almost 2V ac.) Use of the center conductor, with the armor as a return, for transmission of 60 Hz power is still acceptable, however, as volt-level interference in a 150V ac power supply is of little consequence.

Referring again to Fig. 2, the notch at 73 kHz essentially sets an upper limit on the data rate, even though frequencies above this resonance can be passed without such severe attentuation. That is, Fourier analysis of a modulated data signal at a frequency above 73 kHz will show that that signal includes harmonic components in the lower frequency ranges. The loss of components in the 73 kHz range may be fatal to the integrity of that higher frequency data. Accordingly, the problem as discussed in more generalized terms above can be reduced in a simpler aspect to one of eliminating the inter-conductor coupling losses, such as shown in Fig. 2, if possible.

Thus it is an object of the invention to eliminate these inter-conductor coupling losses without any physical modifications to the actual cables themselves.

Further, to be of any significant utility in this industry, such a solution should be of a generalized form which is widely and easily implemented without regard to the specific physical characteristics of any particular cable in a given class such as, for example, the seven-conductor cable described above.

Moreover, such a solution should be inexpensive, uncomplicated, versatile, and reliable, so that it can be easily installed and used on virtually any borehole logging cable operation, without the need for special training of personnel, extraordinarily expensive equipment, and so forth.

The present invention meets the above needs and purposes with a cost-effective, uncomplicated, and versatile method and apparatus which can be easily implemented on virtually any such logging cable installation or application. To explain how this is done, firstly in short a physical model of the system is presented, then a mathematically rigorous analysis will be developed which, it will be found, is wholly consistent with the physical model.

To understand the physical model, consider first what is happening at the 73 kHz represented in Fig. 2. As described earlier, it can be seen that this is essentially a resonant frequency in the cable at which capacitive and inductive effects cause nearly all of the energy in the conductor to be coupled into adjacent conductors. In another cable the frequency would probably be slightly different, but the same general physical phenomenon takes place. Now, if the energy could somehow be prevented from coupling into adjacent conductors, it would have to remain in the primary or selected conductor. Conceptually, therefore, it is somewhat easier to visualize the invention if one thinks, not of trying to keep the energy in the primary conductor, but rather of what one can do to keep the energy out of the non-primary or non-selected conductors. Again, if the net energy transfer into non-selected conductors is zero, it follows that there is no energy coupled into those conductors, and thus it remains where it was intended to remain - in the selected conductor.

While it might be possible to achieve this result using but a single pair of selected signal-carrying conductors in some cable configurations, it is not possible to do so in the seven-conductor cable which is virtually the only multi-conductor cable configuration presently used in the logging industry. As taught by the present invention, however, it has been found that, by using multiple pairs of conductors for carrying a given data channel, it is possible to avoid coupling energy into, and therefore losing energy into, other lines which are not carrying that data signal. In fact, a plurality of combinations, or modes, can be used simultaneously, as will be developed in particular detail below.

For the present, to establish the pictorial or physical model clearly, just the single mode illustrated in Fig. 6.1 will be described. As shown therein, two pairs of conductors have been selected for carrying simultaneously the same data signal. The first pair is conductors 1-2 and the second is 4-5. The conductors in each pair are "oppositely going", which means that they receive the opposite polarities of the signal which is being transmitted. For purposes of convenience, conductor 1 is labeled 'plus' and conductor 2 is labeled 'minus', but this is not meant to imply that the signal is a direct current signal. In fact, the conductors will often be floating with respect to ground, so that the data signal is more properly considered a floating alternating current signal. For purposes of discussion, however, so that the relationships among the several conductors can be followed, one will be labeled plus when the signal is of one sign and minus when it, at the same time, is of opposite sign. Referring again to Fig. 6.1, then, conductor 4 of the pair 4-5 is considered positive or plus and conductor 5 minus. Therefore, the signal levels on conductors 1 and 4 will always be identical, and likewise those on 2 and 5 will similarly always be identical.

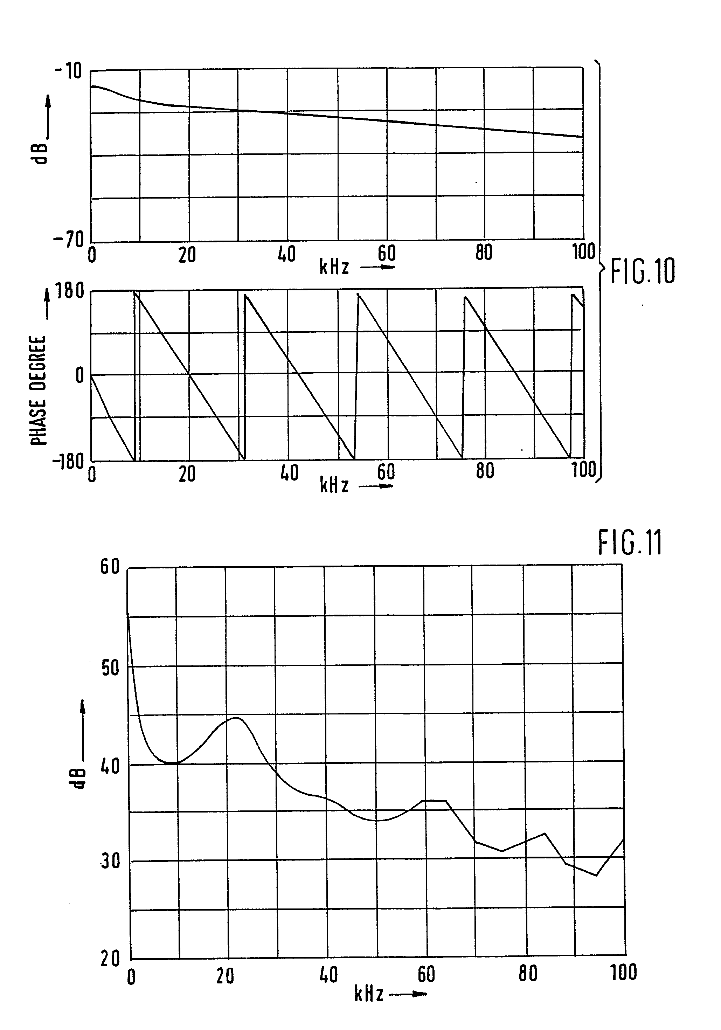

Now consider the effect upon conductors 3, 6 and 7. Whatever energy might be coupled from conductor 1 into conductor 3 or conductor 6 will be precisely counteracted by the energy which conductor 5 is attempting to couple into those conductors, since 1 and 5 are symmetrically related respectively to conductors 6 and 3. The same will be seen to be the case for conductors 2 and 4. The same arguments apply also to the case of conductor 7. Accordingly, the net energy coupled into the non-selected conductors, 3, 6 and 7 is zero. Essentially all the data signal energy, therefore, remains in the selected conductors 1-2 and 4-5, and the dramatic notch at approximately 73 kHz (Fig. 2) is eliminated. Physical tests upon actual cables in fact prove that actual cables perform essentially in accordance with this model, as shown in Fig. 10, which is a graph of the transmission response of the 6.1 mode on a standard wireline logging cable.

While the preceding is pictorially satisfying, it is also possible to reach the same results in a mathematically rigorous way, as suggested above. As it turns out, the mathematical approach is entirely different conceptually from the pictorial approach described above, and does not start at all with express concepts of oppositely going cancellation of coupled signals. Instead, the effects of each conductor on each other, and also on themselves, are related or specified mathematically. Thus, in a two-conductor cable, an input signal on conductor #1 represented by $I_1$, will produce an output signal (which could be zero or non-zero) on conductor #2, represented by $O_2$, which can be represented mathematically as the product of $I_1$ times a factor representing the coupling between the two conductors. Then, since the reverse is true, and since the input to each conductor will also cause an output signal on that conductor, the total output signal on any conductor will be the sum of those factors (that is, its own attenuated input, plus signals coupled in from other conductors). The inputs and outputs can then expressed mathematically as vectors I and O, and each of the terms relating to coupling and transmission on and among them can be placed in a coupling matrix P. The output vector O is then the product of P times I. This is developed more rigorously below.

When mathematically expressing each possible effect of each conductor on others, and on itself as well, the task mathematically is to see if any combinations of conductors can be found such that the terms on non-selected conductors cancel out - that is, become zero. It turns out that, because of the symmetry of the system, and hence the symmetry of the mathematics, such solutions can be found (as developed in detail below). These input signals I are the eigenvectors of the coupling matrix P. Not at all surprisingly, these eigenvectors are identically the combinations as those pictorial combinations specified earlier on the basis of symmetrical cancellation of coupled signals.

More in detail the coupling matrix for a wireline will be described. The case of a six-wire line will be considered first; the seventh conductor will be considered later.

Schematically, a wireline can be represented as in Fig. 4. At the input 20 to a coupling matrix 25 (represented mathematically herein by P), each wire will bear a certain input signal (voltage or current) which will be designated $I_1$ for wire 1, $I_2$ for wire 2, etc. The output signals 30 will similarly be represented by $O_1$ for wire 1, $O_2$ for wire 2, etc. The wireline, represented by matrix 25, is then seen to propagate the input signals I and transform them into the output signals O. This propagation, represented mathematically by the wireline coupling matrix P, changes the I's into O's mathematically as follows:

$$
\begin{vmatrix} O_1 \\ O_2 \\ O_3 \\ O_4 \\ O_5 \\ O_6 \end{vmatrix}
=
\begin{vmatrix}
P_{11} & P_{12} & P_{13} & P_{14} & P_{15} & P_{16} \\
P_{21} & P_{22} & P_{23} & P_{24} & P_{25} & P_{26} \\
P_{31} & P_{32} & P_{33} & P_{34} & P_{35} & P_{36} \\
P_{41} & P_{42} & P_{43} & P_{44} & P_{45} & P_{46} \\
P_{51} & P_{52} & P_{53} & P_{54} & P_{55} & P_{56} \\
P_{61} & P_{62} & P_{63} & P_{64} & P_{65} & P_{66}
\end{vmatrix}
\begin{vmatrix} I_1 \\ I_2 \\ I_3 \\ I_4 \\ I_5 \\ I_6 \end{vmatrix}
\qquad (1)
$$

Fig. 5 illustrates the first row of elements in the matrix P, which are all the terms for conductor 1.

If all the off-diagonal terms of the coupling matrix P were zero, i.e. $P_{ij} = O$ for $i \neq j$, then there would be no crosstalk between the wires, and we would obtain the simple result that $O_i = P_{ii}.I_i$ for $i = 1\text{-}6$, so that the output of any wire would be proportional to the input on that wire. This would certainly be the ideal situation. However, in real life, capacitive and inductive coupling exists in the wireline, leading to non-diagonal terms in the coupling matrix P. These cross terms, such as $P_{12}$, etc., are in general as large as the diagonal terms, making propagation of a signal on a single wire impossible without severe interference.

With the teachings of the present invention, however, it is not only possible to propagate signals in such a cable 10 with minimal interference, but it is possible as well to explain mathematically how this is done and why it works. For convenience, we will use a condensed vector notation to describe the line propagation equation (1). Denoting the output signal by O, the input signal by I, and the propagation matrix by P we have:

$$O = P.I \qquad (2)$$

Given that there are coupling terms which mix input signals, the next best thing we might hope for is to impress a signal on possibly several wires and have that signal propagate undisturbed along the wireline, except for a possible overall reduction in amplitude. Hence the output signal O should be of the form:

$$O = \lambda I \qquad (3)$$

with $\lambda$ a constant. This equation is shorthand for $O_1 = \lambda I_1$, $O_2 = \lambda I_2,....,O_6 = \lambda I_6$. Combining with equation (2), we see that the desired signals would be given by the solution of the equation:

$$P.I = \lambda I \qquad (4)$$

Input signals I which satisfy equation (4) are then called the eigenvectors of the coupling matrix P, and $\lambda$ are the eigenvalues associated with these eigenvectors. Since the wireline is also a waveguide, these eigenvectors are called the normal modes of the wireline. The terms "modal" or "modal components" broadly refer to computed combinations of voltage or current on a polyphase transmission line which are uncoupled and can be mathematically treated as if being propagated on a single electrical conductor. The eigenvalues are simply the scaling factors which relate the inputs to the outputs. Note that if there are no off-diagonal coupling terms as discussed above, the eigenvectors are simply the inputs to six individual wires, which, for wire 1 looks like:

$$V_1 = \begin{vmatrix} I_1 \\ 0 \\ 0 \\ 0 \\ 0 \\ 0 \end{vmatrix} \qquad (5)$$

with eigenvalue $P_{11}$. Similar expressions are obtained for wires $I_2$ to $I_6$.

Now the eigenvectors of the more general propagation matrix of equation (1) will be found. The exact size and nature of the individual terms of the coupling matrix is difficult to establish quantitatively and would certainly depend on detailed properties of the particular line. The symmetry of the wireline does, however, simplify the problem tremendously and allows a general solution without the specific knowledge of the individual terms of the coupling matrix. Indeed, that matrix can be represented schematically as in Fig. 5 for a six-wire line. Clearly because of the symmetry of the model we have the relations:

$$P_{12} = P_{16} \qquad (6)$$
$$P_{13} = P_{15}$$

There are similar relations among the coefficients $P_{21}$, $P_{23}$, $P_{24}$, $P_{25}$, $P_{26}$, corresponding simply to a renumbering of the wires, i.e. a counterclockwise rotation of 60 degrees. In fact, there are only four independent $P_{ij}$, namely, the self-coupling term $P_{11} = P_{22} = P_{33}..$, which we will call $A_0$, the coupling of any wire to its nearest neighbor, $A_1$, the coupling of any wire to its second nearest neighbor, $A_2$, and finally the coupling to the wire diametrically opposite, $A_3$. Hence, the line coupling equation becomes:

$$
\begin{vmatrix} O_1 \\ O_2 \\ O_3 \\ O_4 \\ O_5 \\ O_6 \end{vmatrix} = \begin{vmatrix} A_0 & A_1 & A_2 & A_3 & A_2 & A_1 \\ A_1 & A_0 & A_1 & A_2 & A_3 & A_2 \\ A_2 & A_1 & A_0 & A_1 & A_2 & A_3 \\ A_3 & A_2 & A_1 & A_0 & A_1 & A_2 \\ A_2 & A_3 & A_2 & A_1 & A_0 & A_1 \\ A_1 & A_2 & A_3 & A_2 & A_1 & A_0 \end{vmatrix} \begin{vmatrix} I_1 \\ I_2 \\ I_3 \\ I_4 \\ I_5 \\ I_6 \end{vmatrix}
\tag{7}
$$

This can be further simplified by a choice of scale. We can choose our units so that the self coupling becomes unity, which leaves us with the line equation:

$$
\begin{vmatrix} O_1 \\ O_2 \\ O_3 \\ O_4 \\ O_5 \\ O_6 \end{vmatrix} = \begin{vmatrix} 1 & a_1 & a_2 & a_3 & a_2 & a_1 \\ a_1 & 1 & a_1 & a_2 & a_3 & a_2 \\ a_2 & a_1 & 1 & a_1 & a_2 & a_3 \\ a_3 & a_2 & a_1 & 1 & a_1 & a_2 \\ a_2 & a_3 & a_2 & a_1 & 1 & a_1 \\ a_1 & a_2 & a_3 & a_2 & a_1 & 1 \end{vmatrix} \begin{vmatrix} I_1 \\ I_2 \\ I_3 \\ I_4 \\ I_5 \\ I_6 \end{vmatrix}
\tag{8}
$$

or, using a condensed notation:

$$
O = \begin{vmatrix} A & B \\ B & A \end{vmatrix} I
\tag{9}
$$

where the sub-matrices A and B are given by:

$$A = \begin{vmatrix} 1 & a_1 & a_2 \\ a_1 & 1 & a_1 \\ a_2 & a_1 & 1 \end{vmatrix} \qquad (10)$$

and

$$B = \begin{vmatrix} a_3 & a_2 & a_1 \\ a_2 & a_3 & a_2 \\ a_1 & a_2 & a_3 \end{vmatrix} \qquad (11)$$

Now the eigenvectors and eigenvalues of the matrix:

$$P = \begin{vmatrix} A & B \\ B & A \end{vmatrix} \qquad (12)$$

have to be found.

The problem can be reduced to that of finding the eigenvectors of the 3x3 matrices $A+B$, and $A-B$. Indeed, let x be an eigenvector of the matrix (A-B) with eigenvalue:

$(A-B) x = \lambda x$.

Then:

$$P \begin{vmatrix} x \\ -x \end{vmatrix} = \begin{vmatrix} A & B \\ B & A \end{vmatrix} \begin{vmatrix} x \\ -x \end{vmatrix} = \begin{vmatrix} (A-B) x \\ -(A-B) x \end{vmatrix} = \lambda \begin{vmatrix} x \\ -x \end{vmatrix} \qquad (13)$$

which shows that the vector (x,-x) is an eigenvector of P with eigenvalue $\lambda$. Similarly if

$(A+B) x = \lambda x$

Then:

$$P \begin{vmatrix} x \\ x \end{vmatrix} = \begin{vmatrix} A & B \\ B & A \end{vmatrix} \begin{vmatrix} x \\ x \end{vmatrix} = \begin{vmatrix} (A+B) x \\ (A+B) x \end{vmatrix} = \lambda \begin{vmatrix} x \\ x \end{vmatrix} \qquad (14)$$

which shows that the vector (x,x) is an eigenvector of P with eigenvalue $\lambda$.

The eigenvectors of the form (x,-x) are called antisymmetric eigenvectors and those of the form (x,x) symmetric eigenvectors. The eigenvectors of (A-B) and (A+B), which can easily be found, are given in Table 1 and illustrated in Figs. 6.1-6.6. The significance of these eigenvectors should be clear from the physical representation given in Fig. 6 and in the far right column in Table 1, where + indicates a certain voltage on that wire, -, the negative of that voltage, and O (or null), zero voltage. Note also that the

9

eigenvectors of modes 1 and 2 have the same eigenvalue and can be converted into one another by a mirror imaging operation about the central vertical axis. They are two orthogonal members of a degenerate set of eigenvectors, the rest of which can be made from linear combinations of these two. The implication here is that by attempting to propagate more than two members of the set we would get an arbitrary mixing of the vectors and could not separate them uniquely. The eigenvectors of modes 3 and 4 are similarly part of a degenerate set. The other two eigenvectors have different eigenvalues in general. (Note that in mode 6, impressing the same signal on all lines implies use of another signal return path, such as the armor of the wireline or, perhaps, the earth itself.) Since these six eigenvectors are orthogonal, they are linearly independent, and can therefore be propagated simultaneously along the line and separated at the other end by linear superposition.

## TABLE 1

### Eigenvectors of the Propagation Matrix for a Six-Conductor Wireline

| Mode | Eigenvector | Eigenvalue | Class | Representation |
|------|-------------|------------|-------|----------------|
| 1 | $(1,-1,0,1,-1,0)$ | $1-a_1-a_2+a_3$ | symmetric | o +<br>-   -<br>+ o |
| 2 | $(0,-1,1,0,-1,1)$ | $1-a_1-a_2+a_3$ | symmetric | + o<br>-   -<br>o + |
| 3 | $(0,-1,-1,0,1,1)$ | $1+a_1-a_2-a_3$ | antisymmetric | + o<br>+   -<br>o - |
| 4 | $(1,1,0,-1,-1,0)$ | $1+a_1-a_2-a_3$ | antisymmetric | -   +<br>- o<br>+ - |
| 5 | $(-1,1,-1,1,-1,1)$ | $1-2a_1+2a_2-a_3$ | antisymmetric | -   +<br>+ -<br>+ + |
| 6 | $(1,1,1,1,1,1)$ | $1+2a_1+2a_2+a_3$ | symmetric | +   +<br>+ + |

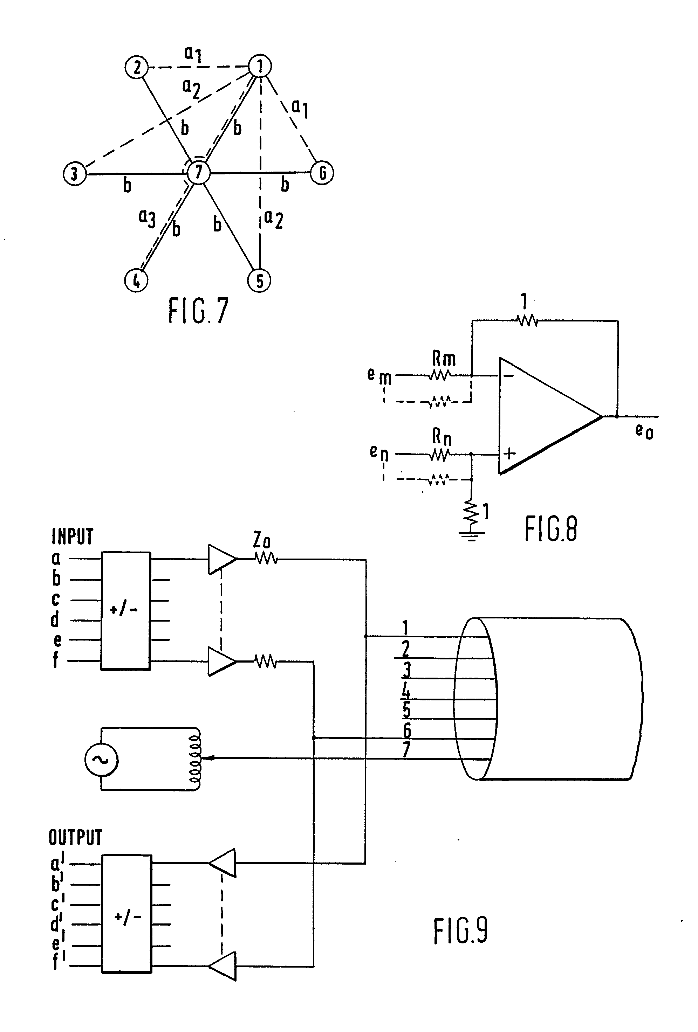

One has to consider now the implication of the seventh wire which is physically a central conductor as shown in Fig. 7 (cf. Fig. 5). The line propagation matrix is now a 7x7 matrix. The sub-matrix describing the propagation on the six outer wires clearly has the same form as the matrix P. It is emphasized that the form of the matrix only is the same. The actual numerical values of the coefficients will be different because of the presence of the central conductor. The seventh row and the seventh column of the propagation matrix describe the coupling between the other six wires and the central conductor and the self coupling of the seventh conductor. Again, because of the physical symmetry of the wireline, all outer wires will couple identically with the central conductor, with a coupling indicated by b. Indicating the self coupling of the central conductor by c, the propagation matrix of the seven conductor wireline is:

$$P_7 = \begin{vmatrix} & & & & b \\ & & & & b \\ & & & & b \\ & & P_6 & & b \\ & & & & b \\ & & & & b \\ b & b & b & b & b & c \end{vmatrix} \qquad (15)$$

where $P_6$ indicates the submatrix for the six-wire line. Once again the eigenvectors of this matrix have to be found, as those will be the signals propagating undisturbed along the wireline. Since we already know the eigenvectors $V_1, V_2$... of $P_6$, this task is trivial. Indeed, one easily verifies that five of the new eigenvectors are:

$$\begin{aligned} (V_1, 0) \\ (V_2, 0) \\ (V_3, 0) \qquad (16) \\ (V_4, 0) \\ (V_5, 0) \end{aligned}$$

This could have been guessed since the sum of all the signals (i.e., the trace) of the eigenvectors $V_1$ through $V_5$ vanishes, so that there is no net cross-coupling into the central conductor.

The next two eigenvectors will obviously be a combination of the vector, $V = (V_6, 0)$, representing the propagation along the outer six wires of an identical signal, and the vector, $W = (0,0,0,0,0,0,1)$, corresponding to a signal propagating in the central conductor. Propagation into the central conductor generates an equal cross talk into the six outer wires, and conversely an identical signal propagating in the six outer wires generates a signal into the central conductor. Mathematically, this is expressed as:

$P_7 V = \lambda_1 V + 6 b W \qquad (17)$

$P_7 W = b V + c W \qquad (18)$

It is found easily that the vectors: $V\pm = a_\pm V + b_\pm W$

with

$a_\pm / b_\pm = b/(\lambda_\pm - \lambda_1)$

where:

$\lambda_1 = 1 + 2a_1 + 2a_2 + a_3$

are eigenvectors with eigenvalues

$\lambda_\pm = ( c + \lambda_1 \pm \sqrt{(c-\lambda_1)^2 + 24 b^2})/2$

In principle these two eigenvectors could be propagated simultaneously along the line. However, since their signal strengths in any individual wire depend on the detailed properties of the line, they must be determined for each individual line. Furthermore, these signals are not differential, as are the other eigenvectors, since their traces do not vanish, and they will be susceptible to noise. Physically it is simpler to use the equations 17 and 18 which tell us that the central conductor can be used, or equivalently the six outer wires, but that a common-mode contamination will be present at the output due to the cross-talk.

Therefore it can be concluded that the addition of the central conductor has not really changed the situation. Six non-degenerate eigenvectors exist and can propagate simultaneously along the wireline undisturbed. However, only five of these are differential signals which will not be corrupted by noise. The central conductor can be chosen also, but it will be prone to common-mode noise problems. If the central conductor is fabricated such that its self coupling, c, is much larger than the cross-coupling, b, which is the case in practice, the central conductor should still provide a reasonably undisturbed signal, as is easily seen by equations (17) and (18).

Having demonstrated the theoretical basis for independent propagation of multiple signals over a six-or seven-conductor wireline, a preferred embodiment of the invention will now be described. Not only is this preferred embodiment instructive, but it also depicts a practical means for implementing the invention.

Assume that six signals, designated a, b, c, d, e, and f have to be transmitted, using the six modes of Table 1. Signal assignments to the six outer lines of the wireline are then (c.f., Fig. 6):

| | Line | | | | | |
|---|---|---|---|---|---|---|
| Mode | 1 | 2 | 3 | 4 | 5 | 6 |
| 1 | a | -a | 0 | a | -a | 0 |
| 2 | 0 | -b | b | 0 | -b | b |
| 3 | 0 | -c | -c | 0 | c | c |
| 4 | d | d | 0 | -d | -d | 0 |
| 5 | -e | e | -e | e | -e | e |
| 6 | f | f | f | f | f | f |

So, the input voltages will be:

$$
\begin{aligned}
I_1 &= a && + d - e + f \\
I_2 &= -a - b - c + d + e + f \\
I_3 &= \quad\ b - c \quad\ - e + f \\
I_4 &= a \quad\quad - d + e + f \\
I_5 &= -a - b + c - d - e + f \\
I_6 &= \quad\ b + c \quad\ + e + f
\end{aligned}
\qquad (19)
$$

It is assumed that there is only attenuation of the signals along the wireline, as here only the means of combining and separating the signals are concerned with. Solving the equations (19) for the received signals, $a'$, $b'$, $c'$, $d'$, $e'$, and $f'$, in terms of the line output voltages, gives:

$$
\begin{aligned}
a' &= (2\,O_1 - O_2 - O_3 + 2\,O_4 - O_5 - O_6)/6 \\
b' &= (\ -O_1 - O_2 + 2\,O_3 - O_4 - O_5 + 2\,O_6)/6 \\
c' &= (\ O_1 - O_2 - 2\,O_3 - O_4 + O_5 + 2\,O_6)/6 \\
d' &= (2\,O_1 + O_2 - O_3 - 2\,O_4 - O_5 + O_6)/6 \\
e' &= (\ -O_1 + O_2 - O_3 + O_4 - O_5 + O_6)/6 \\
f' &= (\ O_1 + O_2 + O_3 + O_4 + O_5 + O_6)/6
\end{aligned}
\qquad (20)
$$

From equation (19) it can be seen that to transmit in all six modes, at most three signals are summed and, at most, four signals are subtracted. At the receiving end (equation (20)), at most, six signals are summed and, at most, four signals are subtracted. These functions may be implemented through the use of transformers or operational analog circuits. The latter are preferred because they are more easily modified during experimentation.

A generalized operational-amplifier circuit for summing and differencing of voltages is shown in Fig. 8. Here, the amplifier shown should be a high-gain operational amplifier, and the response is given by:

$$
e_o = \Sigma_n\, e_n\, \frac{1 + R^-}{(R_n + R_n/R^+)R^-} - \Sigma_m\, e_m/R_m
$$

where

$$R^+ = \frac{1}{\sum\limits_n 1/R_n} \quad \text{and} \quad R^- = \frac{1}{\sum\limits_m 1/R_m}$$

The signals, $e_n$, are the signals to be added by the circuit, and the signals, $e_m$, are the signals to be subtracted. The actual resistances would, of course, be scaled to convenient values.

An interface for transmitting to, receiving from, and powering a logging tool via a seven-conductor wireline is represented schematically in Fig. 9. The interface is shown for one end of the cable; the interface for the other end would be essentially identical. Since the center conductor is subject to interference from potential drops, it may be used for powering the tool, with return on the armor. Each line is driven separately from a buffer amplifier whose output impedance, $Z_O$, is equal to the nominal line impedance (typically 47 ohms). Each line is also connected to the input of another buffer amplifier to eliminate loading effects in the receiver. The buffer amplifiers are, in turn, driven from and drive groups of sum/difference circuits modeled after those described above.

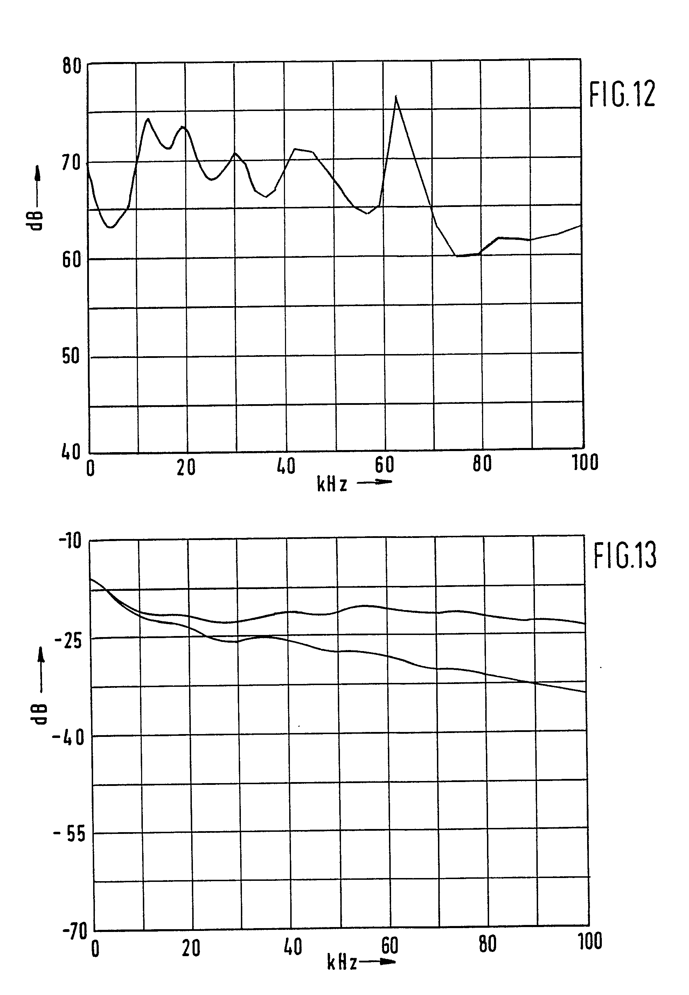

The interface of Fig. 9 was implemented for testing modes 1 and 2 to demonstrate the performance of this invention. The transmission response of mode 1 on a standard cable is shown in Fig. 10. Note the smooth slope of the attenuation and the reduced delay shown by the phase characteristic. The cross-coupling of mode 1 to mode 2 has been correspondingly reduced. The cross-coupling itself is not shown. Instead, Figs. 11 and 12 show the ratio of transmitted signal to cross-coupled signal for both the far end (Fig. 11) and the near end (Fig. 12). The data of Fig. 11 are important in indicating the signal-to-noise ratio which would be expected at the far end of the cable when transmitting two signals simultaneously at the near end. Likewise, Fig. 12 indicates the signal-to-noise ratio expected when simultaneously receiving one and transmitting another signal at the near end.

To test a method of compensation for the high-frequency attenuation of the wireline, a least-squares fit to the data of Fig. 10 was computed. The simulated transmission response, a 13-zero/13-pole transfer function, is shown as the lower curve in Fig. 13. The high-frequency response is easily compensated by the addition of a single zero at $\sigma = -30,000$ Hz in the s-plane of the complex frequency. The resulting transfer function is shown as the upper curve in Fig. 13. This type of transfer function is easily realized as an operational analog circuit. The resultant transfer function should be quite suitable.

As may be seen, therefore, the present invention has numerous advantages. The most important advantage is the substantial improvement in data handling capacity of multi-conductor logging cables without the necessity to make any physical modifications to those cables themselves. This is particularly important in view of the substantial inventory and consequent economic value of cables already in use in the industry. Another advantage of the present invention is its versatility, rendering it useful for virtually any borehole logging application wherein inter-conductor coupling losses need to be reduced or eliminated. Also, although described in particular with respect to six and seven conductor cables, it will be clear that the invention is much more general, and can be applied to cables having other numbers of conductors, whether more or fewer than six or seven. Advantageously, the present invention can also be implemented relatively inexpensively, thereby making it an attractive addition which should find nearly universal adoption in the logging industry. The invention thus removes a major obstacle to the further development and utilization of high data rate tools.

While the methods and forms of apparatus herein described constitute preferred embodiments of this invention, it is to be understood that the invention is not limited to these precise methods and forms of apparatus, and that changes may be made therein without departing from the scope of the invention.

## Claims

1. A method for transmitting data through a cable, comprising:

a) transmitting such data oppositely going on the conductors of at least one conductor pair such that substantially all non-selected conductors in the cable are substantially equally coupled to oppositely going conductors in the selected data carrying conductors, and such that the transmitted data which is coupled inductively and capacitively into the non-selected conductors is, for each such non-selected conductor, accordingly coupled substantially equally in both directions or polarities to cause coupling of the data signals from the selected conductors into each of the non-selected conductors to be effectively cancelled due to the symmetrically presented but oppositely signed coupled signals, thereby effectively neutralizing mutual impedance-caused bandwidth limiting frequency dependant signal attenuation in the logging cable and providing for improved bandwidth data transmission independently of temperature and environmentally dependent changes in inter-conductor coupling in the logging cable while the cable is being used in a borehole, and

b) receiving the data which is transmitted through the cable.

2. The method as claimed in claim 1 further comprising selecting at least two pairs of conductors for transmitting the same data on each pair.

3. The method as claimed in claim 2 wherein said step of selecting at least two pairs of conductors for transmitting such data further comprises transmitting the data substantially equally on each selected pair, such that the signal levels for that data on one conductor of one pair are substantially equal to those on one conductor of the other pair, and those on the other conductor of each pair are also substantially equal to each other, and the conductors in each pair are oppositely going conductors for the data signals.

4. The method as claimed in claim 1 further comprising transmitting multiple, independent data signals on a plurality of channels in the cable by:

a) for each such channel, selecting at least one set of conductors which, while permitted to share conductors with another, is a unique set of conductors for that channel, and

b) for each such channel, transmitting such data according to said transmitting step.

5. The method as claimed in claim 4 wherein said transmitting step further comprises additively superimposing the various data signals for each such selected conductor on that conductor regardless of the various channels with which those particular data signals are associated.

6. The method of claim 5 wherein said receiving step further comprises extracting the various data signals for each of the channels from the superimposed signals.

7. The method of claim 1 wherein said transmitting step further comprises selecting the conductors for the data by:

a) representing the propagation characteristics of the wireline by a coupling matrix,

b) determining the eigenvectors of the coupling matrix, and

c) selecting the conductors for the data in accord with these eigenvectors.

8. A method for transmitting multiple, independent data signals through a cable on multiple, independent channels and with improved bandwidth, comprising:

a) for each such channel, selecting at least two pairs of conductors for transmitting the same data on each pair, such that:

i) substantially all non-selected conductors in the cable are substantially equally coupled to oppositely going conductors in the selected data carrying conductors, and such that the transmitted data which is coupled inductively and capacitively into the non-selected conductors is, for each such non-selected conductor, accordingly coupled substantially equally in both directions or polarities to cause coupling of the data signals from the selected conductors into each of the non-selected conductors to be effectively cancelled due to the symmetrically presented but oppositely signed coupled signals, thereby effectively neutralizing mutual impedance-caused bandwidth limiting frequency dependant signal attenuation in the logging cable and providing for improved bandwidth data transmission independently of temperature and environmentally dependent changes in inter-conductor coupling in the logging cable while the cable is being used in a borehole, and

ii) the conductors for each such channel, while permitted to share conductors with another, are a unique set of conductors for that channel,

b) for each such channel, transmitting the data for that channel:

i) substantially equally on each selected pair, such that the signal levels for that data on one conductor of one pair are substantially equal to those on one conductor of the other pair, and those on the other conductor of each pair are also substantially equal to each other, and the conductors in each pair are oppositely going conductors for the data signals, and ii) with the various data signals for each such selected conductor additively superimposed thereon regardless of the various channels with which those particular data signals are associated, and

c) receiving the data which is transmitted through the cable by extracting the various data signals for each of the channels from the superimposed signals.

9. The method as claimed in claim 8 wherein said selecting step further comprises selecting the conductors for the data by:

a) representing substantially all the inter- and intra-conductor propagation characteristics of the wireline by a coupling matrix,

b) determining the eigenvectors of the coupling matrix, and

c) selecting the conductors for the data in accord with these eigenvectors.

10. Apparatus for transmitting data through a cable, comprising:

a) means for transmitting such data oppositely going on the conductors of at least one conductor pair such that substantially all non-selected conductors in the cable are substantially equally coupled to oppositely going conductors in the selected data carrying conductors, and such that the transmitted data which is coupled inductively and capacitively into the non-selected conductors is, for each such non-selected conductor, accordingly coupled substantially equally in both directions or polarities to cause coupling of the data signals from the selected conductors into each of the non-selected conductors to be effectively cancelled due to the symmetrically presented but oppositely signed coupled signals, thereby effectively neutralizing mutual impedance-caused bandwidth limiting frequency dependant signal attenuation in the logging cable and providing for improved bandwidth data transmission independently of temperature and environmentally dependent changes in inter-conductor coupling in the logging cable while the cable is being used in a borehole, and

b) means for receiving the data which is transmitted through the cable.

11. The apparatus as claimed in claim 10 further comprising means for selecting at least two pairs of conductors for transmitting the same data on each pair.

12. The apparatus as claimed in claim 11 wherein said means for selecting at least two pairs of conductors for transmitting such data further comprises means for transmitting the data substantially equally on each selected pair, such that the signal levels for that data on one conductor of one pair are substantially equal to those on one conductor of the other pair, and those on the other conductor of each pair are also substantially equal to each other, and the conductors in each pair are oppositely going conductors for the data signals.

13. The apparatus as claimed in claim 10 wherein said means for transmitting further comprises means for transmitting multiple, independent data signals on a plurality of channels in the cable by, for each such channel, selecting at least one set of conductors which, while permitted to share conductors with another, is a unique set of conductors for that channel.

14. The apparatus as claimed in claim 13 wherein said means for transmitting further comprises means for additively superimposing the various data signals for each such selected conductor on that conductor regardless of the various channels with which those particular data signals are associated.

15. The apparatus as claimed in claim 14 wherein said means for receiving further comprises means for extracting the various data signals for each of the channels from said superimposed signals.

16. The apparatus as claimed in claim 10 wherein said means for transmitting further comprises means for selecting the conductors for the data by:

a) representing the propagation characteristics of the wireline by a coupling matrix,

b) determining the eigenvectors of the coupling matrix, and

c) selecting the conductors for the data in accord with these eigenvectors.

17. An apparatus for transmitting multiple, independent data signals through such a cable on multiple, independent channels and with improved bandwidth, comprising:

a) for each such channel, means for selecting at least two pairs of conductors for transmitting the same data on each pair, such that:

i) substantially all non-selected conductors in the cable are substantially equally coupled to oppositely going conductors in the selected data carrying conductors, and such that the transmitted data which is coupled inductively and capacitively into the non-selected conductors is, for each such non-selected conductor, accordingly coupled substantially equally in both directions or polarities to cause coupling of the data signals from the selected conductors into each of the non-selected conductors to be effectively cancelled due to the symmetrically presented but oppositely signed coupled signals, thereby effectively neutralizing mutual impedance-caused bandwidth limiting frequency dependant signal attenuation in the logging cable and providing for improved bandwidth data transmission independently of temperature and environmentally dependent changes in inter-conductor coupling in the logging cable while the cable is being used in a borehole, and

ii) the conductors for each such channel, while permitted to share conductors with another, are a unique set of conductors for that channel,

b) for each such channel, means for transmitting the data for that channel:

i) substantially equally on each selected pair, such that the signal levels for that data on one conductor of one pair are substantially equal to those on one conductor of the other pair, and those on the other conductor of each pair are also substantially equal to each other, and the conductors in each pair are oppositely going conductors for the data signals, and

15

ii) with the various data signals for each such selected conductor additively superimposed thereon regardless of the various channels with which those particular data signals are associated, and

c) means for receiving the data which is transmitted through the cable by extracting the various data signals for each of the channels from said superimposed signals.

18. The apparatus as claimed in claim 17 wherein said means for selecting further comprises means for selecting the conductors for the data by:

a) representing substantially all the inter- and intra-conductor propagation characteristics of the wireline by a coupling matrix,

b) determining the eigenvectors of the coupling matrix, and

c) selecting the conductors for the data in accord with these eigenvectors.

19. The method as claimed in any one of the foregoing claims for use with a multi-conductor borehole logging cable.

20. The apparatus as claimed in any one of the foregoing claims for use with a multi-conductor borehole logging cable.

21. Method for transmitting data signals through a cable substantially as described in the description with reference to the Figs. 1, and 4-13 of the appended drawings.

22. Apparatus for transmitting data signals through a cable substantially as described in the description with reference to the Figs. 1, and 4-13 of the appended drawings.

) 1 9 9 1 . 0

FIG.1

7

10

6

1

5

2

11

4

3

12    13

FIG.4

25

I₁
I₂
20
I_N

COUPLING
MATRIX
P

O₁
O₂
30
O_N

FIG.5

②  P₁₂  ① P₁₁

P₁₃            P₁₆

③            ⑥

P₁₄    P₁₅

④    ⑤

FIG.6.1

⑥    ①
   +
⑤ -  ⑦  - ②
   +
④    ③

MODE 1

FIG.6.2

⑥    ①
 +
⑤ -  ⑦  - ②
        +
④    ③

MODE 2

FIG.6.3

⑥    ①
 +
⑤ +  ⑦  - ②
        -
④    ③

MODE 3

FIG.6.4

⑥    ①
      +
⑤ -  ⑦  + ②
   -
④    ③

MODE 4

FIG.6.5

⑥    ① -
 +
⑤ -  ⑦  + ②
   +      -
④    ③

MODE 5

FIG.6.6

⑥    ①
 +    +
⑤ +  ⑦  + ②
   +    +
④    ③

MODE 6

FIG.2
PRIOR
ART

FIG.3
PRIOR
ART

FIG.7

FIG.8

FIG.9

FIG.10

FIG.11

i9 2 0 1 9 9 1 . 0

FIG.12

FIG.13